# EUROPÄISCHE PATENTSCHRIFT

(11) **EP 1 269 014 B1**
(45) Veröffentlichungstag und Bekanntmachung des Hinweises auf die Patenterteilung: **19.10.2005**
(21) Anmeldenummer: 00984823.5
(22) Anmeldetag: 11.10.2000
(51) Int. Cl.: F03D 7/02

(54) **EINZELBLATTVERSTELLUNG FÜR WINDENERGIEANLAGEN**
INDIVIDUAL BLADE ADJUSTMENT FOR WIND TURBINES
DISPOSITIF DE REGLAGE D'UNE PALE INDIVIDUELLE DESTINE A DES EOLIENNES

(30) Priorität: 11.10.1999 DE 19948997
(43) Veröffentlichungstag der Anmeldung: 02.01.2003
(73) Patentinhaber: Aerodyn Engineering GmbH, 24768 Rendsburg (DE)
(72) Erfinder: LEHNHOFF, Martin, 24797 Breiholz (DE)
(74) Vertreter: Biehl, Christian
(86) Internationale Anmeldenummer: PCT/DE2000/003574
(87) Internationale Veröffentlichungsnummer: WO 2001/027471

(56) Entgegenhaltungen:
- WO-A-99/23384
- DE-A- 3 110 263
- DE-A- 3 110 265
- DE-A- 3 110 266
- FR-A- 1 553 046

## Beschreibung

Die Erfindung betrifft eine Einzelblattverstellung für Windenergieanlagen nach dem Oberbegriff des Anspruchs 1.

Moderne Windenergieanlagen werden oft zur Regelung oder Steuerung der Generatorleistung mit Systemen zur Verstellung des Rotorblattwinkels ausgestattet. Neben der Regelungs- oder Steuerfunktion haben die Blattverstellsysteme immer auch die Aufgabe einer Sicherheitsbremse, indem die Rotorblätter auf große positive oder negative Winkel gestellt werden und der Rotor dadurch ein Bremsmoment erzeugt.

Die bisher für große Windenergieanlagen bekannten Blattwinkelverstellungen können eingeteilt werden in elektrisch und hydraulisch betätigte Systeme. Allen Systemen gemeinsam ist die Lagerung der Rotorblätter an der Anschlußstelle zur Nabe mittels eines Wälzlagers.

Elektrisch betätigte Systeme bestehen dabei in der Regel aus einem Getriebemotor je Rotorblatt, der über Ritzel und Zahnkranz ein Drehmoment an der Blattwurzel erzeugt. Der Motor kann am Rotorblatt befestigt sein und in einen mit der Nabe verbundenen Zahnkranz eingreifen oder an der Nabe befestigt sein und in einen rotorblattseitigen Zahnkranz am Blattlager eingreifen. Die elektrische Versorgung der Motoren erfolgt über Schleifringsysteme. Für den Fall, daß das Schleifringsystem oder die gesamte Stromversorgung ausfällt, werden die Motoren durch Batterien gespeist.

Hydraulisch betätigte Systeme nutzen Hydraulikzylinder für die Blattwinkelverstellung. Bei kollektiver Blattverstellung überträgt ein einzelner Hydraulikzylinder die Verstellkräfte in die Nabe und über eine Verstellmechanik auf Zapfen an den Rotorblattwurzeln. Hydraulische Einzelblattverstellungen haben für jedes Rotorblatt einen Hydraulikzylinder, der direkt auf den Zapfen am Rotorblatt wirkt. Der Hydraulikdruck wird dann durch eine Drehdurchführung in die Nabe übertragen. Bei Ausfall der Drehdurchführung werden die Hydraulikzylinder durch Druckspeicher in der Nabe gespeist.

Eine derartige hydraulische Blatteinstelleinrichtung ist die aus der DE C2 31 10 263 bekannte Einstelleinrichtung, die ein in Notsituationen sicheres Hydrauliksystem beschreibt, bei dem zwei Stellantriebe auf mit Hebeln angelenkte Verbindungsglieder wirken. Hierbei ist jedenfalls die Synchronisierung der Nullstellung aufwendig. Weiter sind zur Beibehaltung der Segelstellung zusätzlich mechanisch betätigte Verriegelungselemente notwendig.

In der DE C2 31 10 265 des gleichen Anmelders, die zeitgleich angemeldet wurde, sind die Einzelheiten einer Blatteinstellvorrichtung zu entnehmen, die die Blätter in gleichem Winkel hält, ohne jedoch zu verhindern, daß sie auch separat betrieben werden können.

Weiter ist die DE A1 42 21 783 zu nennen, in der eine Vorrichtung zum Verstellen von Rotorblättern beschrieben ist, bei der ein koaxial zur Rotornabe angeordnetes Getriebe mit einem Motor über eine Zahnsegmentbindung die Verstellung der Blätter bewirkt.

In der DE A1 198 11 952 schließlich ist ein Verfahren zur Feststellung der Rotorblätter einer Horizontalrotorwindkraftanlage beschrieben sowie eine Vorrichtung zur Durchführung des Verfahrens, das durch Mittel zur permanenten Sperrung eines vorbestimmten Verstellwinkelbereichs der Rotorblätter um ihre Längsachse gekennzeichnet ist. Diese Mittel sind durch eine nach außen ragende Sperrklinke gebildet.

Die Erfindung hat sich nun zur Aufgabe gestellt, die Zuverlässigkeit eines Blattwinkelverstellsystemes zu erhöhen. Die Zuverlässigkeit ist dabei maßgeblich für die Sicherheit einer Windenergieanlage. Es kann ansonsten zu unkontrollierbaren Zuständen kommen, in denen die Rotordrehzahl nicht durch die Blattverstellanlage abgebremst werden kann.

Daher kommt der Betriebs- und Ausfallsicherheit eines solchen Systems höchste Bedeutung zu. Elektrische Blattwinkelverstellsysteme haben dabei den prinzipiellen Nachteil, daß die Stellmotoren bei Ausfall der Spannungsversorgung, z.B. beim Netzausfall oder Kabelbruch, auf einen Energiespeicher in Form von Akkumulatoren angewiesen sind. Sie müssen auf diesen zunächst umgeschaltet werden. Daher ist ein elektrisches Verstellsystem auch im Fehlerfall auf die Funktion mehrerer, elektrischer Komponenten angewiesen, die durch Überspannungen aus dem Netz oder Blitzeinschläge, die häufig gerade mit Netzausfällen korrespondieren, beschädigt werden können.

Andererseits erfordern bisher bekannte hydraulische Blattverstellsysteme aufgrund der Größe der Hydraulikzylinder und der geometrischen Verhältnisse Durchbrüche in der tragenden Struktur der Rotornabe. Diese Durchbrüche sind selbstverständlich unerwünscht, da sie einerseits die dynamische Belastbarkeit der Nabe reduzieren und andererseits die Abdichtung gegen eintretende Feuchtigkeit oder salzhaltige Atmosphäre insbesondere bei Offshore-Windkraftanlagen erschweren oder unmöglich machen. Die Verwendung eines einzelnen Hydraulikzylinders für die genaue Einstellung des Blattwinkels und gleichzeitig für die Verstellung um große Winkel bei einer Abschaltung führt bei dessen Auslegung zudem zu Kompromissen zu Lasten der Einstellgenauigkeit.

Die Erfindung löst diese Aufgabe mit den Merkmalen des Hauptanspruches. Die Unteransprüche geben vorteilhafte Ausführungsformen der Erfindung wieder.

Insbesondere ist vorteilhaft, daß zur Verbesserung der Regelbarkeit und der Verringerung der Abmessungen eines hydraulischen Blattverstellsystemes die Regel- und Abschaltfunktion voneinander entkoppelt werden. Ein Regelzylinder verstellt das Rotorblatt nur in dem für die Leistungs- bzw. Drehzahlregelung erforderlichen Winkelbereich, während ein Abschaltzylinder den Regelzylinder über eine Verstellmechanik in die Regel- bzw. Abschaltposition bewegt.

In dieser Konfiguration kann der Regelzylinder allein auf die Regelfunktion ausgelegt werden. Der geringere Hub des Regelzylinders führt zusätzlich zu einer deutlich höheren Auflösung des erforderlichen Wegmeßsystems.

Der Abschaltzylinder andererseits kann ebenfalls hinsichtlich Verstellkraft und -geschwindigkeit ohne Rücksicht auf Regelbarkeit optimal für die Verstellfunktion ausgelegt werden.

Ein weiterer, wesentlicher Vorteil des Systems ist die Verringerung der Gesamtabmessungen. Durch die Verwendung von zwei Zylindern, deren Anordnung durch die Geometrie eines verstellgestänges bestimmt wird, kann das System vollständig innerhalb der Nabe angeordnet werden. Dadurch kann die Nabe vollständig gekapselt oder kontrolliert belüftet werden.

Zusätzlich kann die Nabenstruktur für optimalen Kraftfluß konstruiert werden, da keine Durchbrüche für das Verstellsystem erforderlich sind.

Dabei zeigt:
- Fig. 1: das System in Abschaltposition, d. h. bei einem Blattwinkel von 90°,
- Fig. 2: die Hauptschwinge in Betriebsposition, d. h. z.B. bei einem Blattwinkel von 30°,

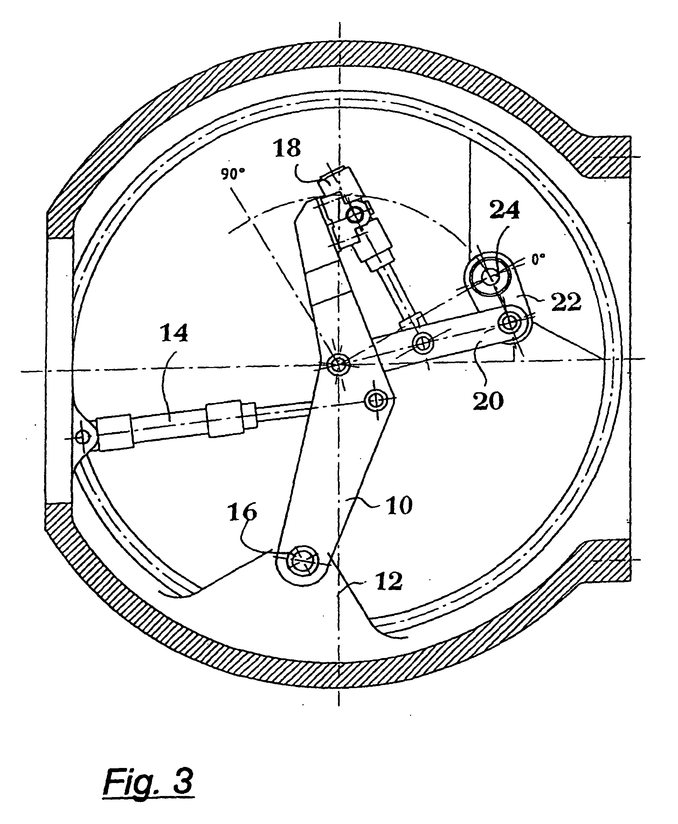

- Fig. 3: die Blattschwinge bei voll ausgefahrenem Regelzylinder bei einem Blattwinkel von ca. 0°,
- Fig. 4: das System in einer zweiten Ausgestaltung in der Abschaltposition,
- Fig. 5: das System der Ausführung aus Fig. 2 in einer Betriebsposition, d. h. bei einem Blattwinkel von 30°,
- Fig. 6: das System in der Fig. 5 bei voll ausgefahrenem Regelzylinder bei einem Blattwinkel von ca. 0°, und
- Fig. 7: das Schaltbild der Hydraulik in schematischer Übersicht.

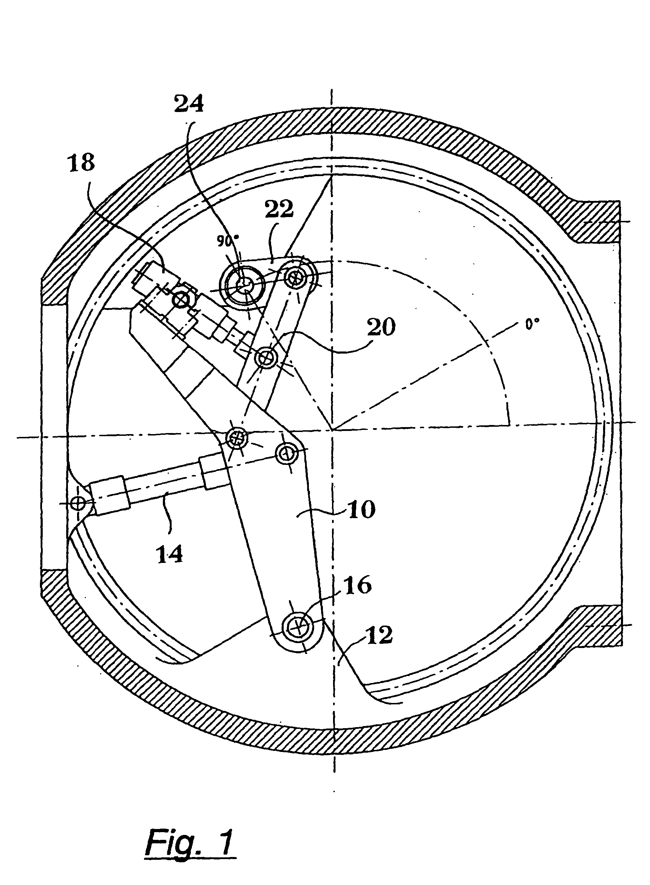

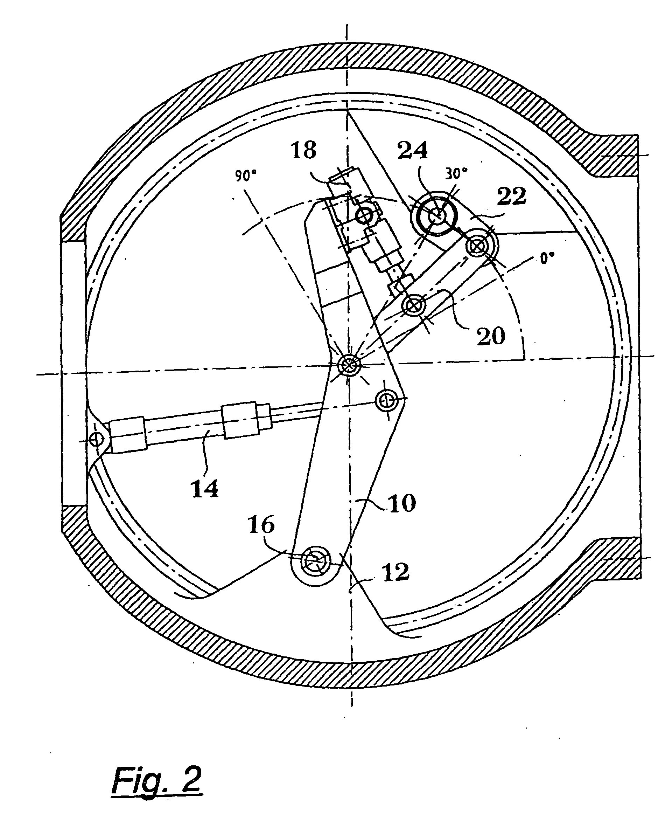

Bei der in der Fig. 1 dargestellten Blattverstellung ist eine Hauptschwinge 10 an einem nabenseitigen Vorsprung 12 befestigt und wird über einen Abschaltzylinder 14, der im Winkel zur Hauptschwinge 10 ebenfalls an der Rotornabe befestigt ist, verschwenkbar um seinen Anlenkpunkt 16 gehalten. Wie (vergl. mit der Fig. 2) dargestellt, ist durch Auslängen des Abschaltzylinders 14 die Hauptschwinge 10 um eine große Winkelstrecke verschwenkbar.

Am Ende der Hauptschwinge 10 befindet sich im wesentlichen parallel zu einem leicht abgewinkelten Abschnitt der Hauptschwinge 10 ein auf der Hauptschwinge befestigter Regelzylinder 18, der auf eine Blattschwinge 20 wirkt, die in einem mittleren Bereich der Hauptschwinge 10 nahe dem Bereich, an dem der Abschaltzylinder 14 auf die Hauptschwinge wirkt, wiederum verschwenkbar angesetzt ist.

Diese Blattschwinge 20 ist nun über eine Koppelstange 22, - die zum Ausgleich der Längendifferenzen vorgesehen ist -, mit einem Blattzapfen 24 ihrerseits verschwenkbar mit dem zu verstellenden Blatt verbunden. Nun können sowohl durch Auslängen des Regelzylinders 18 wie auch des Abschaltzylinders 14 Blattverstellungen bewirkt werden. Bei Ausfall eines der Zylinder kann durch Betrieb des anderen Zylinders zumindest ein Teil der erwünschten Wegstrecke verfahren werden, und so zumindest annähernd eine Grobverstellung auf den gewünschten Blattwinkel erfolgen.

Die Einzelblattverstellung benötigt zum Erzielen des erfindungsgemäß erwünschten Erfolgs dabei wenigstens zwei an eine im wesentlichen in der Schnittebene des Blattanschlusses angeordnete Schwinge angesetzte, eine Linearauslängung erzeugende Antriebe 14, 18, wobei je ein Ende der Schwinge über je eine Schwenkverbindung 16, 24 mit einer kraftübermittelnden Anlenkung zur Nabe und einem Element an dem zu verstellenden Blatt versehen ist. Damit ist ein Hebelgetriebe realisiert.

Dabei sollten zur Feinjustierung und dem Verfahren zum Abschalten des Blattes zwei unterschiedliche Auslängung erzeugende Linarantriebe vorgesehen werden. Einer kann dabei als Elektrospindelantrieb ausgebildet sein. Dies wird insbesondere für den Regelantrieb mit geringem Hub vorgeschlagen. Es können jedoch auch beide Linearantriebe als Hydraulikzylinder 14, 18 ausgebildet sein.

Die in den vorangegangenen Figuren gezeigte Variante besitzt den Vorteil, daß in der Betriebsposition der Drehpunkt in der Blattschwinge genau auf der Rotorblattachse liegt. In dieser Anordnung bewegen sich Blattzapfen 24 und Schwinge bei Regelvorgängen um die gleiche Achse. Dies und die geometrische Anordnung des Regelzylinders 18 ermöglichen sowohl ein nahezu konstantes Blattverstellmoment über den gesamten Regelbereich, als auch eine ausschließlich tangentiale Krafteinleitung in den Blattbolzen.

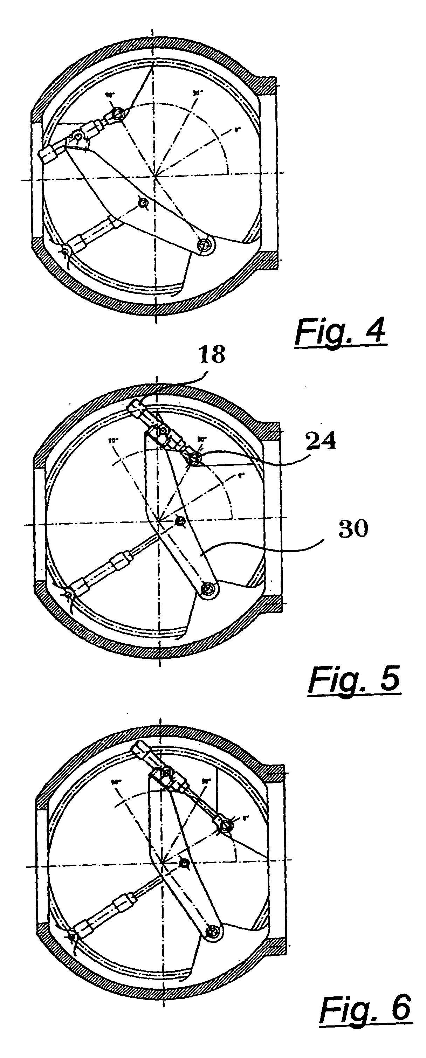

Die in den Figuren 4 - 6 gezeigte zweite Variante besitzt eine einzige Schwinge 30, bei der der Regelzylinder 18 direkt den Blattzapfen 24 betätigt, so daß die Realisierung mit weniger konstruktivem Aufwand möglich ist.

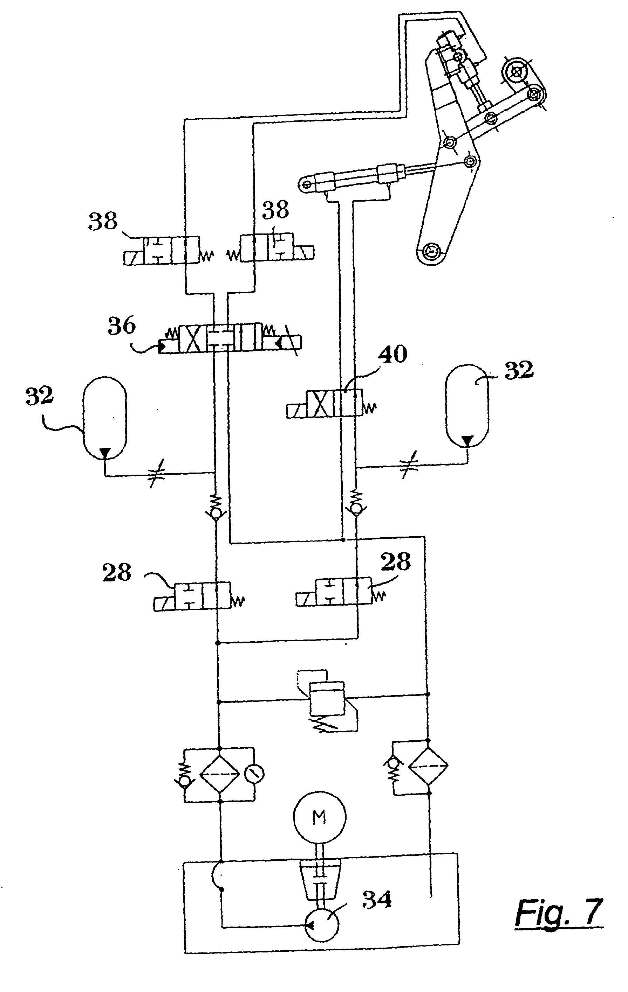

Die in der Fig. 7 dargestellte Hydraulikschaltung ermöglicht es, Abschalt- und Regelzylinder unabhängigen Druckspeichersystemen zuzuordnen, die bewirken, daß Druckverluste durch Leckage- oder Leitungsbruch in einem der Kreise nicht die Funktion des anderen Kreises beeinträchtigen. Dadurch ist gewährleistet, daß bei Ausfall eines Kreises das Rotorblatt durch die getrennte hydraulische Betätigung und die gewählte Geometrie des Betätigungsgestänges immer auf einem für die Sicherheit der Anlage unkritischen Blattwinkel verstellt werden kann. Dies ist auch in der zweiten Variante der Erfindung möglich, in der der Regelzylinder direkt auf den Blattzapfen wirkt.

Die in der Fig. 7 dargestellte Druckversorgung von Regel- und Abschaltzylindern kann im Fehlerfall getrennt durch die Ventile 28 abgeschaltet werden. Diese Ventile sind als 2/2-Wege-Ventile ausgeführt. Beide Kreise verfügen über separate Druckspeicher 32, die so dimensioniert sind, daß die Zylinder aus den Druckspeichern ohne zusätzliche Versorgung durch die Hydraulikpumpe 34 vollständig eingefahren werden können.

Der Regelzylinder wird nun über ein Proportionalventil 36 angesteuert, daß in Mittelstellung durch Zwei-2/2-WegeVentile 38 vom Zylinder getrennt ist.

Der Abschaltzylinder wird durch ein 4/2-Wege-Ventil 40 angesteuert. Dadurch kann der Verstellzylinder nur in seine Endposition gefahren werden und bei Abfall der Versorgungsspannung für das Ventil fährt der Abschaltzylinder automatisch in die Abschaltposition.

## Patentansprüche

1. Einzelblattverstellung für Windenergieanlagen, wobei wenigstens ein Rotorblatt an einer Nabe der Windenergieanlage gelagert ist, **gekennzeichnet durch**
zwei an wenigstens einer bewegliche Schwinge (10, 20; 30) im wesentlichen in der Schnittebene des Blattanschlusses angesetzte, mit der Schwinge (10, 20; 30) ein Hebelgetriebe bildende, jeweils eine Linearauslängung erzeugende Antriebe (14, 18),
wobei je ein Ende des Hebelgetriebes über je eine Schwenkverbindung (16, 24) mit einer kraftüberniittelnden Anlenkung zur Nabe und einem Element an dem zu verstellenden Blatt versehen ist.

2. Einzelblattverstellung für Windenergieanlagen nach Anspruch 1, **dadurch gekennzeichnet, daß** die Schwinge aus wenigstens zwei Teilschwingen, einer Haupt- (10) und einer Blattschwinge (20), besteht, die gegeneinander in der Ebene des Hebelgetriebes verschwenkbar sind.

3. Einzelblattverstellung für Windenergieanlagen nach Anspruch 1 oder 2, **dadurch gekennzeichnet, daß** zwei unterschiedliche Auslängung erzeugende Linearantriebe (14, 18) vorgesehen sind.

4. Einzelblattverstellung für Windenergieanlagen nach einem der vorangehenden Ansprüche, **dadurch gekennzeichnet, daß** der Linearantrieb (18) mit geringerem Hub als Elektrospindelantrieb ausgebildet ist.

5. Einzelblattverstellung für Windenergieanlagen nach Anspruch 3, **dadurch gekennzeichnet, daß** beide Linearantriebe (14, 18) als Hydraulikzylinder ausgebildet sind.

6. Einzelblattverstellung für Windenergieanlagen nach einem der vorangehenden Ansprüche, **dadurch gekennzeichnet, daß** ein Linearantrieb (14) auf der Nabe abgestützt ist.

7. Einzelblattverstellung für Windenergieanlagen nach einem der vorangehenden Ansprüche, **dadurch gekennzeichnet, daß** ein Linearantrieb (18) die beiden Teilschwingen (10, 20) der Schwinge gegeneinander verschwenkt.

8. Einzelblattverstellung für Windenergieanlagen nach einem der vorangehenden Ansprüche 5 bis 7, **gekennzeichnet durch** zwei getrennte Hydraulikkreise mit zwei Druckspeichern (32) die über 2/2-Wege Ventile jeweils getrennt abgeschaltet werden können, wobei der Abschaltzylinder (14) **durch** ein 4/2-Wege Ventil angesteuert ist.

## Claims

1. Individual blade adjustment system for wind turbines, at least one rotor blade being mounted on the hub of the wind turbine, **characterized by** two drives (14, 18) attached to at least one movable rocker arm (10, 20, 30) substantially in the intersecting plane of the blade connection in each case producing a linear extension forming with the rocker arm (10, 20, 30) a lever gear and in each case one end of the lever gear by means of in each case one pivot connection (16, 24) is provided with a force-transmitting articulation to the hub and an element on the blade to be adjusted.

2. Individual blade adjustment system for wind turbines according to claim 1, **characterized in that** the rocker arm comprises at least two partial rocker arms, a main rocker arm (10) and a blade rocker arm (20), which can be pivoted against one another in the plane of the lever gear,

3. Individual blade adjustment system for wind turbines according to claim 1 or 2, **characterized in that** there are two different extension-producing linear drives (14, 18).

4. Individual blade adjustment system for wind turbines according to one of the preceding claims, **characterized in that** the linear drive (18) with the shorter stroke is constructed as an electric spindle drive.

5. Individual blade adjustment system for wind turbines according to claim 3, **characterized in that** both linear drives (14, 18) are constructed as hydraulic cylinders.

6. Individual blade adjustment system for wind turbines according to one of the preceding claims, **characterized in that** one linear drive (14) is supported on the hub.

7. Individual blade adjustment system for wind turbines according to one of the preceding claims, **characterized in that** one linear drive (18) pivots against one another the two partial rocker arms (10, 20) of the rocker arm.

8. Individual blade adjustment system for wind turbines according to one of the claims 5 to 7, **characterized by** two separate hydraulic circuits with two pressure storage devices (32), which can be separately disconnected by means of 2/2-way valves, the disconnection cylinder (14) being controlled by a 4/2-way valve.

## Revendications

1. Dispositif de réglage de pale individuelle destiné à des installations éoliennes, une pale de rotor au moins étant montée sur un moyeu de l'installation éolienne, **caractérisé par** deux commandes (14, 18) reliées à au moins un bras oscillant mobile (10, 20 ; 30) essentiellement dans le plan de coupe du raccord de la pale, qui produisent chacune un allongement linéaire et forment avec le bras oscillant (10, 20 ; 30) un mécanisme à levier, chacune des extrémités du mécanisme à levier étant dotée, par le biais d'un raccord orientable (16, 24), d'une liaison articulée par rapport au moyeu, qui transmet la force, et d'un élément sur la pale à régler.

2. Dispositif de réglage de pale individuelle destiné à des installations éoliennes selon la revendication 1, **caractérisé en ce que** le bras oscillant est composé d'au moins deux parties de bras oscillant, à savoir d'un bras oscillant principal (10) et d'un bras oscillant de pale (20) qui peuvent pivoter l'un par rapport à l'autre dans le plan du mécanisme à levier.

3. Dispositif de réglage de pale individuelle destiné à des installations éoliennes selon la revendication 1 ou 2, **caractérisé en ce que** sont prévues deux commandes linéaires (14, 18) produisant deux allongements différents.

4. Dispositif de réglage de pale individuelle destiné à des installations éoliennes selon l'une des revendications précédentes, **caractérisé en ce que** la commande linéaire (18), de course inférieure, est réalisée en tant que commande électrique par broche.

5. Dispositif de réglage de pale individuelle destinées à des installations éoliennes selon la revendication 3, **caractérisé en ce que** les deux commandes linéaires (14, 18) sont réalisées en tant que vérins hydrauliques.

6. Dispositif de réglage de pale individuelle destiné à des installations éoliennes selon l'une des revendications précédentes, **caractérisé en ce qu'**une commande linéaire (14) prend appui sur le moyeu.

7. Dispositif de réglage de pale individuelle destiné à des installations éoliennes selon l'une des revendications précédentes, **caractérisé en ce qu'**une commande linéaire (18) fait pivoter les deux parties (10, 20) du bras oscillant l'une contre l'autre.

8. Dispositif de réglage de pale individuelle destiné à des installations éoliennes selon l'une des revendications précédentes 5 à 7, **caractérisé par** deux circuits hydrauliques séparés avec deux accumulateurs de pression (32) pouvant être mis hors circuit séparément par des soupapes à 2/2 voies, le vérin de coupure (14) étant commandé par une soupape à 4/2 voies.
